# DEMANDE DE BREVET EUROPEEN

(11) **EP 4 843 872 A1**
(43) Date de publication de la demande: **25.11.2026**
(21) Numéro de dépôt: 26171458.8
(22) Date de dépôt: 09.04.2026
(51) Int. Cl.: B62D 25/02

(54) **DISPOSITIF DE SUPPORT POUR DOSSIER DE SIÈGE ARRIÈRE**

(30) Priorité: 19.05.2025 FR 2505307
(71) Demandeur: Stellantis Auto SAS, 78300 Poissy (FR)
(72) Inventeur: BENANE, SAID, 94240 L HAY LES ROSES (FR)
(74) Mandataire: BCIP

(57) **Abrégé**

L'invention concerne un dispositif (1) de support pour une caisse (2) d'un véhicule automobile conçu pour supporter un dossier d'un siège arrière, le dispositif (1) étant conçu pour être solidarisé sur un panneau latéral (3), le dispositif (1) comprenant une première face (4) formant une arche (5) présentant un premier pied (6) et un deuxième pied (7), le premier pied (6) étant conçu pour résister à un effort de compression prédéterminé, résultant d'un choc arrière subi par la caisse (2) équipée du dispositif (1), suivant une direction prédéterminée correspondant à une direction longitudinale (AL) de la caisse (2) lorsque le dispositif (1) est fixé sur la caisse (2), le deuxième pied (6) étant conçu pour résister à un effort en traction prédéterminé engendré par le choc arrière suivant la direction prédéterminée, la première face (4) étant conçue pour subir une déformation programmée suivant une direction orthogonale à la direction prédéterminée.

## Description

Le domaine technique concerne les dispositifs de support d'un dossier de siège arrière, les caisses de véhicule automobile présentant au moins un tel dispositif de support et les véhicules automobiles présentant une telle caisse.

Le domaine de la sécurité routière constitue une priorité majeure pour les constructeurs automobiles, en particulier dans le contexte des évolutions rapides vers les véhicules à motorisation électrique. Ces derniers imposent en effet des exigences techniques spécifiques, non seulement pour garantir la sécurité des passagers, mais également pour assurer l'intégrité de composants critiques tels que la batterie, particulièrement fragiles en cas de collision.

Le développement d'un nouveau véhicule implique une prise en compte rigoureuse des préoccupations liées à la sécurité passive, dans un cadre réglementaire de plus en plus exigeant. Les véhicules doivent satisfaire à des protocoles d'essais normalisés simulant divers scénarios de chocs, notamment frontaux, latéraux ou arrière. Ces procédures imposent des performances mécaniques de plus en plus élevées en matière de résistance à la déformation, ce qui contraint les constructeurs à développer en permanence de nouvelles solutions d'ingénierie.

Dans le cas particulier des véhicules électriques, la batterie représente un enjeu central de sécurité. Sa protection est cruciale, car une déformation excessive du châssis lors d'un choc peut provoquer des dommages internes à la batterie, engendrant des risques sévères tels qu'un incendie ou une explosion. Une telle situation met en danger non seulement les occupants du véhicule, mais aussi les équipes de secours intervenant après un accident.

Simultanément, l'optimisation de l'autonomie opérationnelle d'un véhicule électrique passe généralement par une réduction significative de sa masse, ce qui se traduit par une recherche constante d'allègement de la structure de la caisse. Cette exigence d'allègement entre néanmoins en conflit avec les impératifs de sécurité: il devient en effet de plus en plus complexe de concevoir des structures capables à la fois de respecter les normes de résistance aux chocs et de protéger efficacement la batterie, tout en minimisant le poids global du véhicule.

À cela s'ajoutent d'autres contraintes réglementaires, notamment l'obligation de maintenir l'intégrité de certains éléments considérés comme vitaux en cas de collision. À titre d'exemple, dans le cas d'un choc arrière, le dossier de siège arrière doit être maintenu par un support conçu pour ne pas se désolidariser de la caisse. Un tel support est généralement dimensionné pour résister à des efforts importants, ce qui induit une masse non négligeable. De plus, deux supports sont généralement nécessaires, un de chaque côté du véhicule, alourdissant d'autant plus la structure.

Ainsi, il existe un besoin d'une solution permettant de minimiser la masse des supports de dossier tout en garantissant un maintien du dossier conforme à la réglementation.

La présente invention a pour objet de pallier les problèmes exposés précédemment. Dans ce contexte technique, un but de la présente invention est de fournir un dispositif de support présentant une masse allégée et capable de résister à un choc arrière.

A cet effet, la présente invention se rapporte à un dispositif de support pour une caisse d'un véhicule automobile, le dispositif de support étant conçu pour supporter un dossier d'un siège arrière du véhicule, le dispositif étant conçu pour être solidarisé sur un panneau latéral de la caisse, le dispositif comprenant une première face formant une arche présentant un premier pied et un deuxième pied, le premier pied étant conçu pour résister à un effort de compression prédéterminé, résultant d'un choc arrière subi par la caisse équipée du dispositif, suivant une direction prédéterminée correspondant à une direction longitudinale de la caisse lorsque le dispositif est fixé sur la caisse, le deuxième pied étant conçu pour résister à un effort en traction prédéterminé engendré par le choc arrière suivant la direction prédéterminée, la première face étant conçue pour subir une déformation programmée suivant une direction orthogonale à la direction prédéterminée.

L'invention concerne également une caisse de véhicule automobile comprenant au moins un panneau latéral de custode et au moins un dispositif de support selon l'invention, chaque premier pied étant fixé entre l'extrémité avant de la caisse et le deuxième pied suivant l'axe longitudinal du véhicule, chaque première face étant conçue pour subir une déformation programmée suivant une direction transversale de la caisse en cas de choc arrière, chaque dispositif de support étant positionné pour supporter un dossier de siège arrière.

L'invention concerne enfin un véhicule automobile présentant au moins une caisse de véhicule selon l'invention.

Ainsi, l'expérience montre que le dispositif de support selon l'invention permet de garantir un maintien adéquat du dossier en cas de choc arrière. Les premier et deuxième pieds garantissent le maintien en position du dossier tandis que la déformation suivant un axe perpendiculaire la direction prédéterminée permet d'absorber une partie de l'énergie d'un choc arrière transmise au dispositif de support. Ainsi, le dispositif selon l'invention représente une diminution de masse dont la résistance est compensée par la forme en arche. Ainsi, le dispositif de support selon l'invention permet de respecter la réglementation en termes de résistance à l'arrachement et/ou de maintien du dossier tandis qu'il représente un gain de masse et donc potentiellement un gain d'autonomie pour un véhicule électrique.

Selon un mode de réalisation du dispositif de support, le premier et/ou deuxième pieds présentent une section transversale en forme de L.

Selon une possibilité du dispositif de support selon l'invention, une gâche de fixation du dossier fait saillie du premier pied.

Selon un mode de réalisation, le dispositif de support comporte un bras de liaison s'étendant entre les premier et deuxième pieds.

Avantageusement, le dispositif de support comporte une pluralité de pattes de fixation conçues pour permettre la fixation du dispositif au panneau latéral.

Selon une possibilité, le dispositif de support est formé par emboutissage d'une tôle.

L'invention sera mieux comprise à la lecture de la description détaillée qui va suivre, donnée uniquement à titre d'exemple non limitatif et faite en se référant au dessin annexé sur lequel :

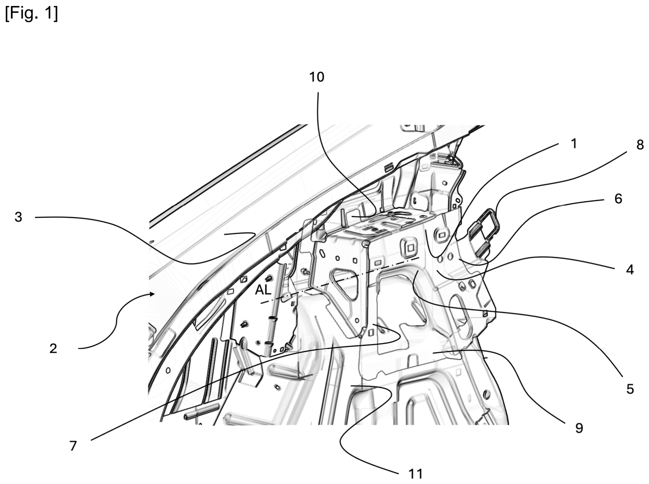

[Fig. 1] la figure 1 représente une vue en perspective partielle d'une caisse de véhicule selon l'invention montrant le dispositif de support.

Un dispositif 1 de support selon l'invention, illustré sur la figure 1, est conçu pour équiper une caisse 2 d'un véhicule automobile selon l'invention, partiellement illustrée sur la figure. Le dispositif 1 de support est conçu pour supporter un dossier d'un siège arrière du véhicule, non illustrés.

Le dispositif 1 est conçu pour être solidarisé sur un panneau latéral 3 de la caisse 2, notamment un panneau de custode. Avantageusement, le dispositif 1 de support est réalisé par emboutissage d'une tôle.

Comme illustré sur la figure, le dispositif 1 comprend une première face 4 formant une arche 5 présentant un premier pied 6 et un deuxième pied 7.

Le premier pied 6 est conçu pour résister à un effort de compression prédéterminé, résultant d'un choc arrière subi par la caisse 2 équipée du dispositif 1, suivant une direction prédéterminée correspondant à une direction longitudinale AL de la caisse 2 lorsque le dispositif 1 est fixé sur la caisse 2. Dans le mode de réalisation illustré sur la figure, une gâche 8 fait saillie du premier pied 6. La gâche 8 s'étend suivant la direction prédéterminée. La gâche 8 permet le verrouillage du dossier sur le dispositif 1 de support. Par exemple, le premier pied 6 s'étend essentiellement suivant la direction longitudinale AL.

Le deuxième pied 7 est, quant à lui, conçu pour résister à un effort en traction prédéterminé engendré par le choc arrière suivant la direction prédéterminée.

La première face 4 est enfin conçue pour subir une déformation programmée suivant une direction orthogonale à la direction prédéterminée, c'est-à-dire une direction transversale de la caisse 2 lorsque le dispositif 1 est fixé à la caisse 2.

Dans l'exemple décrit sur la figure, les premier 6 et/ou deuxième 7 pieds présentent une section transversale en forme de L. En particulier, le deuxième pied 7 présente une section en forme de L dont une branche s'étend suivant la direction longitudinale AL, lorsque le dispositif 1 est fixé sur la caisse 2, et l'autre branche suivant une direction transversale de la caisse 2, lorsque le dispositif 1 est fixé sur la caisse 2.

Afin de renforcer la tenue du dispositif 1 de support en cas de choc arrière subi par la caisse 2, les premier 6 et deuxième 7 pieds sont reliés par un bras de liaison 9, illustré sur la figure.

Afin d'assurer la fixation du dispositif 1 sur le panneau latéral 3, le dispositif 1 de support comporte une pluralité de pattes de fixation 10 conçues pour permettre la fixation du dispositif 1 au panneau latéral 3, par exemple, par point de soudure.

Dans la caisse 2 selon l'invention, chaque dispositif 1 de support est positionné pour supporter un dossier de siège arrière. Chaque premier pied 6 de chaque dispositif 1 de support est fixé entre l'extrémité avant de la caisse 2, non illustrée, et le deuxième pied 7, suivant l'axe longitudinal AL de la caisse 2. En d'autres termes, le premier pied 6 est fixé en avant du deuxième pied 7. Chaque première face 4 est alors conçue pour subir une déformation programmée, par exemple un pliage, suivant une direction transversale de la caisse 2 en cas de choc arrière.

Comme illustré sur la figure, dans la caisse 2, les premier 6 et deuxième 7 pieds reposent sur un passage de roue 11 de la caisse 2. Par exemple, le bras de liaison 9 s'étend en appui du passage de roue 11.

Ainsi, l'expérience montre que le dispositif 1 de support permet de garantir un maintien du dossier en cas de choc arrière. Les premier 6 et deuxième 7 pieds garantissent le maintien en position du dossier tandis que la déformation suivant un axe perpendiculaire la direction prédéterminée permet d'absorber une partie de l'énergie d'un choc arrière transmise au dispositif 1 de support. Ainsi, le dispositif 1 représente une diminution de masse dont la résistance est compensée par la forme de la première face 4 formant l'arche 5.

L'invention ne se limite pas au mode de réalisation du dispositif de support décrit ci-avant, seulement à titre d'exemple, mais d'autres modes de réalisation peuvent être conçus par l'homme de métier sans sortir du cadre et de la portée de la présente invention.

## Revendications

1. Dispositif (1) de support pour une caisse (2) d'un véhicule automobile, le dispositif (1) de support étant conçu pour supporter un dossier d'un siège arrière du véhicule, le dispositif (1) étant conçu pour être solidarisé sur un panneau latéral (3) de la caisse (2), le dispositif (1) comprenant une première face (4) formant une arche (5) présentant un premier pied (6) et un deuxième pied (7), le premier pied (6) étant conçu pour résister à un effort de compression prédéterminé, résultant d'un choc arrière subi par la caisse (2) équipée du dispositif (1), suivant une direction prédéterminée correspondant à une direction longitudinale (AL) de la caisse (2) lorsque le dispositif (1) est fixé sur la caisse (2), le deuxième pied (6) étant conçu pour résister à un effort en traction prédéterminé engendré par le choc arrière suivant la direction prédéterminée, la première face (4) étant conçue pour subir une déformation programmée suivant une direction orthogonale à la direction prédéterminée.

2. Dispositif (1) de support selon la revendication 1, **caractérisé en ce que** le premier (6) et/ou deuxième (7) pieds présentent une section transversale en forme de L.

3. Dispositif (1) de support selon la revendication 1 ou 2, **caractérisé en ce qu'**une gâche (8) de fixation du dossier fait saillie du premier pied (6).

4. Dispositif (1) de support selon l'une des revendications 1 à 3, **caractérisé en ce qu'**il comporte un bras de liaison (9) s'étendant entre les premier (6) et deuxième (7) pieds.

5. Dispositif (1) de support selon l'une des revendications 1 à 4, **caractérisé en ce qu'**il comporte une pluralité de pattes de fixation (10) conçues pour permettre la fixation du dispositif (1) au panneau latéral (3).

6. Dispositif de support selon l'une des revendications 1 à 5, **caractérisé en ce que** 'il est formé par emboutissage d'une tôle.

7. Caisse (2) de véhicule automobile comprenant au moins un panneau latéral (3) de custode et au moins un dispositif (1) de support selon l'une des revendications 1 à 6, chaque premier pied (6) étant fixé entre l'extrémité avant de la caisse (2) et le deuxième pied (7) suivant l'axe longitudinal (AL) du véhicule, chaque première face (4) étant conçue pour subir une déformation programmée suivant une direction transversale de la caisse (2) en cas de choc arrière, chaque dispositif (1) de support étant positionné pour supporter un dossier de siège arrière.

8. Véhicule automobile présentant au moins une caisse (2) de véhicule selon la revendication 7.
